# EUROPEAN PATENT APPLICATION

(11) **EP 4 847 359 A1**
(43) Date of publication of application: **02.12.2026**
(21) Application number: 25747771.1
(22) Date of filing: 23.01.2025
(51) Int. Cl.: B62K 3/02

(54) **FRAME AND BICYCLE**

(30) Priority: 31.01.2024 CN 202420253480 U
(71) Applicant: Dahon Tech (Shenzhen) Co., Ltd., Shenzhen, Guangdong 518100 (CN)
(72) Inventor: LIU, Jiahao, Shenzhen, Guangdong 518100 (CN); HAN, Dewei, Shenzhen, Guangdong 518100 (CN)
(74) Representative: Bayramoglu et al.
(86) International application number: PCT/CN2025/074488
(87) International publication number: WO 2025/162203

(57) **Abstract**

A frame and a bicycle are provided. The frame includes: a top tube, a bottom bracket shell, and a seat tube, where the seat tube includes a tube body; the tube body is connected to the top tube and the bottom bracket shell; the tube body has a central axis extending along an extension direction of the tube body; a tube wall of the tube body at one side of the central axis is recessed inward, such that an outer surface of the tube body forms a mounting recess configured to mount a front derailleur; a tube wall of the tube body at another side of the central axis arches outward to form an outer arch portion, and the outer arch portion and the mounting recess are disposed opposite to each other on two sides of the tube body in an axial direction of the bottom bracket shell; alternatively, the tube wall of the tube body at another side of the central axis arches inward to form an inner arch portion, and the inner arch portion and the mounting recess are disposed opposite to each other on the two sides of the tube body in the axial direction of the bottom bracket shell; or alternatively, the tube wall of the tube body at another side of the central axis arches outward to form an outer arch portion and the tube wall of the tube body at the another side of the central axis arches inward to form an inner arch portion, and the outer arch portion and the inner arch portion are disposed opposite to the mounting recess on the two sides of the tube body in the axial direction of the bottom bracket shell. The frame and the bicycle effectively improve the strength and rigidity of the seat tube.

## Description

### TECHNICAL FIELD

The present disclosure relates to the technical field of bicycles, and in particular to a frame and a bicycle.

### BACKGROUND TECHNOLOGY

A bicycle, also known as a pedal cycle or bike, is typically a two-wheeled land vehicle. A bicycle can not only serve as an eco-friendly means of transportation for travel, but also as a piece of fitness equipment for cycling exercise and travel, making it an important means for travel and fitness in people's daily life.

A bicycle includes a frame, which includes a top tube, a seat tube, and a bottom bracket shell. The seat tube is connected to the top tube and the bottom bracket shell, and is configured to mount a saddle.

In order to mount a front derailleur, a right side of the seat tube is often recessed. However, the recess reduces the strength and rigidity of the seat tube, leading to insufficient strength and rigidity of the seat tube, thereby affecting the strength and rigidity of the entire frame.

### CONTENT OF THE INVENTION

In view of this, the present disclosure provides a frame and a bicycle to solve the above problem.

A frame includes: a top tube, a bottom bracket shell, and a seat tube, where the seat tube includes a tube body; and the tube body is connected to the top tube and the bottom bracket shell; and
the tube body has a central axis extending along an extension direction of the tube body; a tube wall of the tube body at one side of the central axis is recessed inward, such that an outer surface of the tube body forms a mounting recess configured to mount a front derailleur; a tube wall of the tube body at another side of the central axis arches outward to form an outer arch portion, and the outer arch portion and the mounting recess are disposed opposite to each other on two sides of the tube body in an axial direction of the bottom bracket shell; alternatively, the tube wall of the tube body at another side of the central axis arches inward to form an inner arch portion, and the inner arch portion and the mounting recess are disposed opposite to each other on the two sides of the tube body in the axial direction of the bottom bracket shell; or alternatively, the tube wall of the tube body at another side of the central axis arches outward to form an outer arch portion and the tube wall of the tube body at the another side of the central axis arches inward to form an inner arch portion, and the outer arch portion and the inner arch portion are disposed opposite to the mounting recess on the two sides of the tube body in the axial direction of the bottom bracket shell.

In an embodiment, the tube wall of the tube body at the another side of the central axis arches outward to form the outer arch portion; the outer arch portion is provided with an arc-shaped structure; and a smooth transition is provided between the outer arch portion and the outer surface of the tube body.

In an embodiment, the tube wall of the tube body at the another side of the central axis arches inward to form the inner arch portion; the inner arch portion is provided with an arc-shaped structure; and a smooth transition is provided between the inner arch portion and an inner surface of the tube body.

In an embodiment, the tube wall of the tube body at the another side of the central axis arches outward to form the outer arch portion; and in the extension direction of the tube body, two ends of the outer arch portion respectively extend beyond two ends of the mounting recess.

In an embodiment, the tube wall of the tube body at the another side of the central axis arches inward to form the inner arch portion; and in the extension direction of the tube body, two ends of the inner arch portion respectively extend beyond the two ends of the mounting recess.

In an embodiment, the tube wall of the tube body at the another side of the central axis arches outward to form the outer arch portion; and in a circumferential direction of the tube body, two ends of the outer arch portion respectively extend beyond two ends of the mounting recess.

In an embodiment, the tube wall of the tube body at the another side of the central axis arches inward to form the inner arch portion; and in the circumferential direction of the tube body, two ends of the inner arch portion respectively extend beyond the two ends of the mounting recess.

In an embodiment, the tube wall of the tube body at the another side of the central axis arches outward to form the outer arch portion; and in the axial direction of the bottom bracket shell, an arch height of the outer arch portion relative to the tube wall of the tube body is greater than a recess depth of the mounting recess relative to the tube wall of the tube body.

In an embodiment, the tube wall of the tube body at the another side of the central axis arches inward to form the inner arch portion; and in the axial direction of the bottom bracket shell, an arch height of the inner arch portion relative to the tube wall of the tube body is greater than the recess depth of the mounting recess relative to the tube wall of the tube body.

In an embodiment, the tube body includes a first tube and a second tube connected to each other; the first tube is connected to the top tube and the bottom bracket shell; the second tube protrudes from the top tube in the extension direction of the tube body; and the mounting recess and the outer arch portion are formed on the first tube, or the mounting recess and the inner arch portion are formed on the first tube, or the mounting recess, the outer arch portion, and the inner arch portion are formed on the first tube; and
the frame further includes a reinforcing tube; two ends of the reinforcing tube are respectively connected to the second tube and the top tube; and the second tube, the reinforcing tube, and the top tube form a triangular support structure.

In an embodiment, an outer diameter of the first tube gradually increases from one end connected to the top tube to another end connected to the bottom bracket shell; and
the first tube is provided with a middle portion in the extension direction; and the mounting recess is provided at the middle portion of the first tube or on a side of the middle portion close to the bottom bracket shell.

In an embodiment, the frame further includes a head tube and a support tube; the head tube is connected to an end of the top tube away from the seat tube; two ends of the support tube are respectively connected to the bottom bracket shell and the head tube; and the support tube, the top tube, the bottom bracket shell, the seat tube, and the head tube form a triangular support structure.

In an embodiment, the seat tube, the bottom bracket shell, and the top tube are welded to each other.

In an embodiment, the seat tube, the bottom bracket shell, and the top tube are integrally formed.

In an embodiment, the frame further includes a rear fork; the rear fork is connected to the seat tube and the bottom bracket shell; and the rear fork is configured to mount a rear wheel.

In an embodiment, if the tube body is cut by a plane perpendicular to the extension direction, a cross-sectional shape of the tube body is circular.

In an embodiment, if the tube body is cut by a plane perpendicular to the extension direction, a cross-sectional shape of the tube body is elliptical.

A bicycle includes the frame.

In the frame and the bicycle, the outer arch portion on the other side of the tube body is opposite to the mounting recess in the axial direction of the bottom bracket shell. Thus, the outer arch portion and the inner arch portion can offset at least part of the reduction in the strength and rigidity of the seat tube caused by the mounting recess. Compared with the frame in the prior art that is not provided with the outer arch portion or the inner arch portion, the frame of the present disclosure can effectively improve the strength and rigidity of the seat tube, such that the strength and rigidity of the frame are enhanced to meet operational requirements.

### DESCRIPTION OF THE DRAWINGS

FIG. 1 is an isometric view of a frame provided by a preferred embodiment of the present disclosure;
FIG. 2 is a structural view of the frame shown in FIG. 1 with a front derailleur and a rear wheel provided;
FIG. 3 is a front view of the frame shown in FIG. 1;
FIG. 4 is a partial structural view of the frame shown in FIG. 3;
FIG. 5 is an isometric view of the frame shown in FIG. 1 from another perspective; and
FIG. 6 is an isometric view of the frame shown in FIG. 1 from yet another perspective.

### Reference Numerals:

100. frame; 10. top tube; 20. bottom bracket shell; 30. seat tube; 31. tube body; 311. first tube; 312. second tube; 32. mounting recess; 33. outer arch portion; 40. support tube; 50. rear fork; 60. head tube; 70. reinforcing tube; 200. front derailleur; 300. rear wheel; X. axial direction; Z. extension direction; M. circumferential direction; and L. central axis.

### SPECIFIC IMPLEMENTATIONS

To make the above objectives, features and advantages of the present disclosure more comprehensible, the specific implementations of the present disclosure are described in detail below with reference to the drawings. Many details are provided in the following description in order for a thorough understanding of the present disclosure. However, the present disclosure may be implemented in many other ways other than those described herein, and those skilled in the art may make similar improvements without departing from the connotation of the present disclosure. Therefore, the present disclosure is not limited to the specific embodiments disclosed below.

It should be noted that, in the description of the present disclosure, the terms such as "central", "longitudinal", "transverse", "long", "wide", "thick", "upper", "lower", "front", "back", "left", "right", "vertical", "horizontal", "top", "bottom", "inner", "outer", "clockwise", "anticlockwise", "axial", "radial" and "circumferential" are used to indicate orientations shown in the drawings. It should be noted that these terms are merely intended to facilitate a simple description of the present disclosure, rather than to indicate or imply that the mentioned apparatus or elements must have the specific orientation or be constructed and operated in the specific orientation. Therefore, these terms may not be construed as a limitation to the present disclosure.

In addition, the terms "first" and "second" are merely intended for a purpose of description, and shall not be understood as an indication or implication of relative importance or implicit indication of a quantity of indicated technical features. Therefore, a feature limited by "first" or "second" may explicitly or implicitly include at least one such feature. In the description of the present disclosure, "a plurality of" means at least two, such as two or three, unless otherwise clearly and specifically limited.

In the present disclosure, unless otherwise clearly specified, the terms such as "mounting", "interconnection", "connection" and "fixation" are intended to be understood in a broad sense. For example, the "connection" may be a fixed connection, removable connection or integral connection; may be a mechanical connection or electrical connection; may be a direct connection or indirect connection using a medium; and may be a communication or interaction between two elements. Those of ordinary skill in the art may understand the specific meanings of the above terms in the present disclosure based on the specific situation.

In the present disclosure, unless otherwise explicitly specified, when it is described that a first feature is "above" or "below" a second feature, it indicates that the first and second features are in direct contact or the first and second features are in indirect contact through an intermediate feature. In addition, when it is described that the first feature is "over", "above" and "on" the second feature, it indicates that the first feature is directly or obliquely above the second feature, or simply indicates that an altitude of the first feature is higher than that of the second feature. When it is described that the first feature is "under", "below" or "beneath" the second feature, it indicates that the first feature is directly or obliquely under the second feature or simply indicates that an altitude of the first feature is lower than that of the second feature.

It should be noted that when a component is "fixed" or "provided" on another component, the component may be fixed on another component directly or via an intermediate component. When a component is connected to another component, the component may be connected to another component directly or via an intermediate component. The terms "vertical", "horizontal", "upper", "lower", "left", "right" and other similar expressions used herein are for illustrative purposes only, rather than to mean the only implementation.

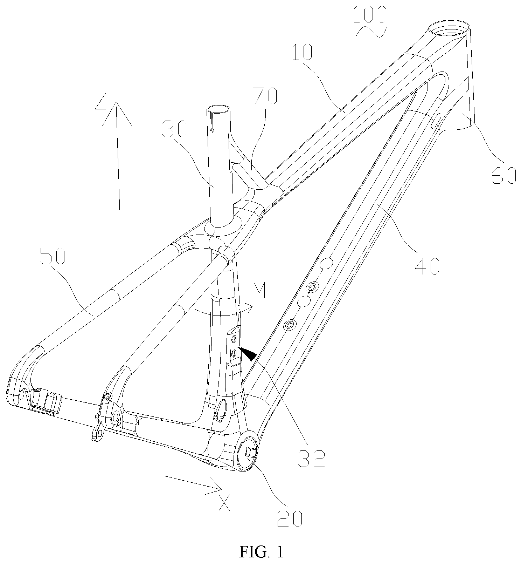

Referring to FIG. 1, an embodiment of the present disclosure provides frame 100, including top tube 10, bottom bracket shell 20, and seat tube 30. The seat tube 30 is connected to the top tube 10 and the bottom bracket shell 20. The seat tube 30 is configured to mount a saddle. Specifically, the seat tube 30 is connected to a seat post, and the saddle is mounted on the seat post.

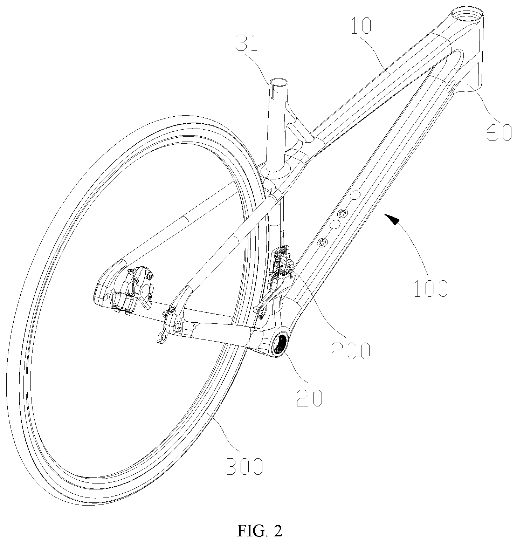

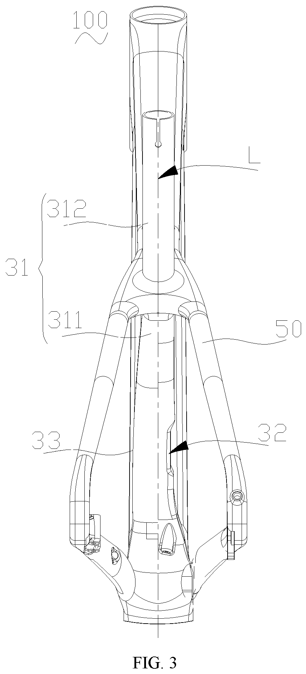

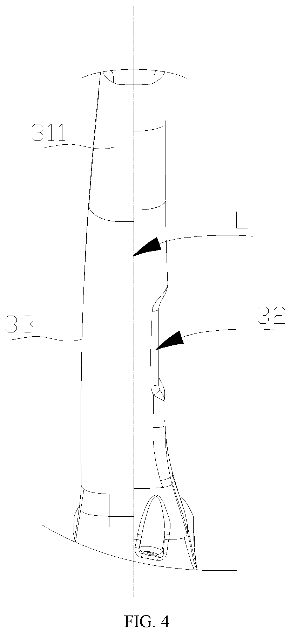

Referring to FIG. 2, the seat tube 30 includes tube body 31, and the tube body 31 is connected to the top tube 10 and the bottom bracket shell 20. Referring to FIGS. 3 and 4, the tube body 31 has central axis L extending along extension direction Z. In some specific implementations, the tube body 31 extends in a vertical direction, and in this case, the extension direction Z of the tube body 31 is parallel to the vertical direction. In other specific implementations, the tube body 31 does not extend in the vertical direction, and in this case, the extension direction Z of the tube body 31 is inclined with respect to the vertical direction. It should be noted here that the central axis L is a centerline passing through a center of the tube body 31, and the tube body 31 is axisymmetric about the central axis L. In some specific implementations, if the tube body 31 is cut by a plane perpendicular to the extension direction Z, a cross-sectional shape formed by the cut is a circular ring. In other specific implementations, the cross-sectional shape of the tube body 31 is an elliptical ring. It is conceivable that in other implementations, the cross-sectional shape of the tube body 31 may also be other axisymmetric shapes, which are not limited herein.

Furthermore, in FIGS. 3 to 5, a tube wall of the tube body 31 at one side of the central axis L is recessed inward, such that an outer surface of the tube body 31 forms mounting recess 32 (see FIG. 2) for assembling front derailleur 200. The front derailleur 200 is configured for gear shifting of the bicycle. It should be noted here that because the tube wall of the tube body 31 is recessed inward to form the mounting recess 32, the tube body 31 formed with the mounting recess 32 will no longer be axisymmetric.

Referring to FIGS. 3, 4, and 6, the tube wall of the tube body 31 at the another side of the central axis L arches outward to form outer arch portion 33, or the tube wall of the tube body 31 at the another side of the central axis L arches inward to form an inner arch portion, or the tube wall of the tube body 31 at the another side of the central axis L arches outward to form an outer arch portion 33 and the tube wall of the tube body 31 at the another side of the central axis L arches inward to form an inner arch portion. That is, the outer arch portion 33 arches outward relative to another position of the tube body 31, and the inner arch portion arches inward relative to another position of the tube body 31. In other words, the position where the outer arch portion 33 or the inner arch portion is formed on the tube body 31 forms a thickened portion of the tube body 31. When the tube wall of the tube body 31 at the another side of the central axis L arches outward to form the outer arch portion 33, the outer arch portion 33 and the mounting recess 32 are disposed opposite to each other on two sides of the tube body 31 in axial direction X of the bottom bracket shell 20. Alternatively, when the tube wall of the tube body 31 at the another side of the central axis L arches inward to form the inner arch portion, the inner arch portion and the mounting recess 32 are disposed opposite to each other on the two sides of the tube body 31 in the axial direction X of the bottom bracket shell 20. Alternatively, when the tube wall of the tube body 31 at the another side of the central axis L arches outward to form the outer arch portion 33 and the tube wall of the tube body 31 at the another side of the central axis L arches inward to form the inner arch portion, the outer arch portion 33 and the mounting recess 32 are disposed opposite to each other on the two sides of the tube body 31 in the axial direction X of the bottom bracket shell 20, and the inner arch portion and the mounting recess 32 are disposed opposite to each other on the two sides of the tube body 31 in the axial direction X of the bottom bracket shell 20. It should be noted here that the axial direction X of the bottom bracket shell 20 is also a left-right direction of the frame 100. When the frame 100 is applied to a bicycle, the left-right direction of the frame 100 is a left-right direction of the bicycle, and is perpendicular to a front-rear direction and an up-down direction of the bicycle. In the frame 100 provided by the embodiment of the present disclosure, the outer arch portion 33, or the inner arch portion, or the outer arch portion 33 and the inner arch portion on the other side of the tube body 31 are opposite to the mounting recess 32 in the axial direction X of the bottom bracket shell 20. Thus, the outer arch portion 33 and the inner arch portion can offset at least part of the reduction in the strength and rigidity of the seat tube 30 caused by the mounting recess 32. Compared with the frame 100 in the prior art that is not provided with the outer arch portion 33 or the inner arch portion, the frame of the present disclosure can effectively improve the strength and rigidity of the seat tube 30, such that the strength and rigidity of the frame 100 are enhanced to meet operational requirements.

In some specific implementations, the tube wall of the tube body 31 at the another side of the central axis L arches outward to form the outer arch portion 33, while an inner side of the tube body 31 does not form an inner arch portion. In other specific implementations, the tube wall of the tube body 31 at the another side of the central axis L arches inward to form the inner arch portion, while an outer side of the tube body 31 does not form the outer arch portion 33. In still other specific implementations, the tube wall of the tube body 31 at the another side of the central axis L arches outward to form the outer arch portion 33, and the tube wall of the tube body 31 at the another side of the central axis L arches inward to form the inner arch portion.

In some embodiments, the outer arch portion 33 has an arc-shaped structure, and a smooth transition is provided between the outer arch portion 33 and the outer surface of the tube body 31. On the one hand, this design facilitates the processing of the seat tube 30. On the other hand, it allows the arc-shaped outer arch portion 33 to reduce damage to other components when colliding with them.

Optionally, the inner arch portion also has an arc-shaped structure, and a smooth transition is provided between the inner arch portion and an inner surface of the tube body 31, so as to facilitate the processing of the seat tube 30.

Furthermore, in the extension direction Z of the tube body 31, two ends of the outer arch portion 33 respectively extend beyond two ends of the mounting recess 32. That is, the tube body 31 is provided with a first central plane passing through the central axis L and perpendicular to the axial direction X of the bottom bracket shell 20. In the extension direction Z of the tube body 31, an orthographic projection of the outer arch portion 33 on the first central plane covers an orthographic projection of the mounting recess 32 on the first central plane. In a circumferential direction of the tube body 31, the two ends of the outer arch portion 33 respectively extend beyond the two ends of the mounting recess 32. That is, in the circumferential direction of the tube body 31, the orthographic projection of the outer arch portion 33 on the first central plane covers the orthographic projection of the mounting recess 32 on the first central plane. In a radial direction of the bottom bracket shell 20, an arch height of the outer arch portion 33 relative to the tube wall of the tube body 31 is greater than a recess depth of the mounting recess 32 relative to the tube wall of the tube body 31. It should be noted here that the arch height of the outer arch portion 33 greater than the recess depth of the mounting recess 32 means that a maximum distance from the outer arch portion 33 to an outer surface of the tube wall of the tube body 31 is greater than a maximum distance from a bottom wall of the mounting recess 32 to the outer surface of the tube wall of the tube body 31. For example, in some specific implementations, when the outer arch portion 33 is an arc-shaped structure with a high middle portion and two low sides, a distance from the middle portion of the outer arch portion 33 to the outer surface of the tube wall 31 of the tube body 30 is greater than a maximum distance from the mounting recess 32 to the outer surface of the tube wall of the tube body 31. Generally, the distances from various positions of the bottom wall of the mounting recess 32 to the central axis L are equal, that is, the recess depth of the mounting recess 32 is the same at various positions. In this case, the distance from the middle portion of the outer arch portion 33 to the tube wall 31 of the tube body 30 is greater than the distance from any position of the mounting recess 32 to the tube wall of the tube body 31.

It should also be noted here that the arch height of the outer arch portion 33 does not interfere with the movement of a crank. That is, the outer arch portion 33 does not affect the normal riding of the bicycle.

When the two ends of the outer arch portion 33 respectively extend beyond the two ends of the mounting recess 32 both in the extension direction Z and in the circumferential direction and the arch height of the outer arch portion 33 is greater than the recess depth of the mounting recess 32, the outer arch portion 33 can completely offset the reduction in the strength and rigidity of the seat tube 30 caused by the mounting recess 32, such that the strength and rigidity of the seat tube 30 are improved. Thus, the strength and rigidity of the seat tube 30 can achieve or exceed those of the seat tube 30 without the mounting recess 32, thereby improving the strength and rigidity of the entire frame 100.

Optionally, in the extension direction Z of the tube body 31, two ends of the inner arch portion respectively extend beyond the two ends of the mounting recess 32. That is, in the extension direction Z of the tube body 31, an orthographic projection of the inner arch portion on the first central plane covers the orthographic projection of the mounting recess 32 on the first central plane. In the circumferential direction of the tube body 31, the two ends of the inner arch portion respectively extend beyond the two ends of the mounting recess 32. That is, in the circumferential direction of the tube body 31, the orthographic projection of the inner arch portion on the first central plane covers the orthographic projection of the mounting recess 32 on the first central plane. In the radial direction of the bottom bracket shell 20, an arch height of the inner arch portion relative to the tube wall of the tube body 31 is greater than the recess depth of the mounting recess 32 relative to the tube wall of the tube body 31. It should be noted here that the arch height of the inner arch portion greater than the recess depth of the mounting recess 32 means that a maximum distance from the inner arch portion to an inner surface of the tube wall of the tube body 31 is greater than a maximum distance from the bottom wall of the mounting recess 32 to the outer surface of the tube wall of the tube body 31.

When the two ends of the inner arch portion respectively extend beyond the two ends of the mounting recess 32 both in the extension direction Z and in the circumferential direction and the arch height of the inner arch portion is greater than the recess depth of the mounting recess 32, the inner arch portion can completely offset the reduction in the strength and rigidity of the seat tube 30 caused by the mounting recess 32, such that the strength and rigidity of the seat tube 30 are improved. Thus, the strength and rigidity of the seat tube 30 can achieve or exceed those of the seat tube 30 without the mounting recess 32, thereby improving the strength and rigidity of the entire frame 100.

It is conceivable that in other embodiments, the relationship between the two ends of the outer arch portion 33 or the inner arch portion and the mounting recess 32 in the extension direction Z is not limited. For example, it is also possible that the two ends of the outer arch portion 33 or the inner arch portion in the extension direction Z are respectively flush with the two ends of the mounting recess 32, or that the two ends of the outer arch portion 33 or the inner arch portion in the extension direction Z are lower than the two ends of the mounting recess 32. Similarly, the relationship between the two ends of the outer arch portion 33 or the inner arch portion and the mounting recess 32 in the circumferential direction of the tube body 31 is not limited, and the relationship between the arch height of the outer arch portion 33 or the inner arch portion in the radial direction of the bottom bracket shell 20 and the recess depth of the mounting recess 32 is also not limited.

In some embodiments, still referring to FIG. 3, the tube body 31 includes first tube 311 and second tube 312 connected to each other. The first tube 311 is connected to the top tube 10 and the bottom bracket shell 20. The second tube 312 protrudes from the top tube 10 in the extension direction Z of the tube body 31. The mounting recess 32 and the outer arch portion 33 are formed on the first tube 311, or the mounting recess 32 and the inner arch portion are formed on the first tube 311, or the mounting recess 32, the outer arch portion 33, and the inner arch portion are formed on the first tube 311. The frame 100 further includes reinforcing tube 70, and two ends of the reinforcing tube 70 are respectively connected to the second tube 312 and the top tube 10. The second tube 312, the reinforcing tube 70, and the top tube 10 form a triangular support structure. This design further improves the strength of the frame 100.

It is understandable that in other embodiments, the tube body 31 may also exclude the second tube 312 and include only the first tube 311.

Furthermore, still referring to FIG. 4, an outer diameter of the first tube 311 gradually increases from one end connected to the top tube 10 to another end connected to the bottom bracket shell 20. The first tube 311 is provided with a middle portion in the extension direction Z, and the mounting recess 32 is provided at the middle portion of the first tube 311 or on a side of the middle portion close to the bottom bracket shell 20. In this way, the mounting recess 32 is avoided being provided at a thinner portion of the first tube 311, ensuring the strength and rigidity of the seat tube 30, and thereby ensuring the strength and rigidity of the frame 100.

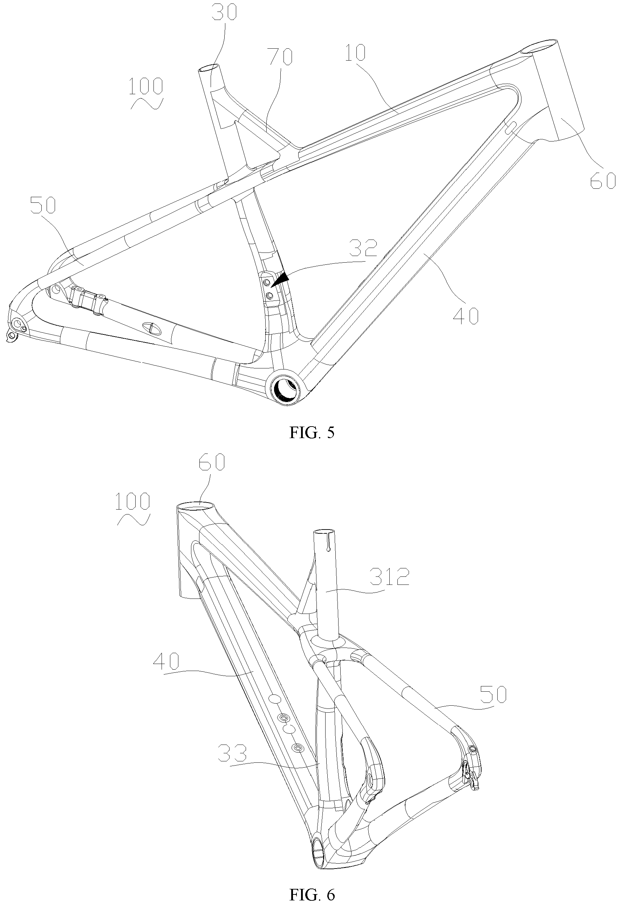

In some embodiments, still referring to FIG. 5, the frame 100 further includes support tube 40 and head tube 60. The head tube 60 is connected to an end of the top tube 10 away from the seat tube 30. Two ends of the support tube 40 are respectively connected to the bottom bracket shell 20 and the head tube 60. The support tube 40, the top tube 10, the bottom bracket shell 20, the seat tube 30, and the head tube 60 form a triangular support structure. This further improves the strength of the frame 100. It is conceivable that in some embodiments, the frame 100 may also exclude the support tube 40, which is not limited here.

Furthermore, the frame 100 further includes rear fork 50. The rear fork 50 is connected to the seat tube 30 and the bottom bracket shell 20, and is configured to mount rear wheel 300.

In some embodiments, the seat tube 30, the bottom bracket shell 20, the support tube 40, the top tube 10, the head tube 60, the rear fork 50, and the reinforcing tube 70 are welded to each other, which facilitates the manufacturing of the frame 100 and saves costs. In other embodiments, the seat tube 30, the bottom bracket shell 20, the support tube 40, the top tube 10, the head tube 60, the rear fork 50, and the reinforcing tube 70 may also be integrally formed.

Another embodiment of the present disclosure further provides a bicycle including the frame 100. The bicycle including the frame 100 has the same beneficial effects as the frame 100, which will not be described in detail here.

The technical features of the foregoing embodiments can be employed in arbitrary combinations. For brevity of description, not all possible combinations of the technical features of the foregoing embodiments are described. However, the combinations of the technical features should be construed as falling within the scope described in this specification as long as there is no contradiction in the combinations.

Only several implementations of the present disclosure are described in detail in the foregoing embodiments, but they should not therefore be construed as limiting the scope of the present disclosure. It should be noted that those of ordinary skill in the art can further make several variations and improvements without departing from the concept of the present disclosure, and these variations and improvements all fall within the protection scope of the present disclosure. Therefore, the protection scope of the present disclosure shall be subject to the appended claims.

## Claims

1. A frame, comprising: a top tube (10), a bottom bracket shell (20), and a seat tube (30), wherein the seat tube (30) comprises a tube body (31); and the tube body (31) is connected to the top tube (10) and the bottom bracket shell (20); and
the tube body (31) has a central axis (L) extending along an extension direction (Z) of the tube body; a tube wall of the tube body (31) at one side of the central axis (L) is recessed inward, such that an outer surface of the tube body (31) forms a mounting recess (32) configured to mount a front derailleur (200); a tube wall of the tube body (31) at another side of the central axis (L) arches outward to form an outer arch portion (33), and the outer arch portion (33) and the mounting recess (32) are disposed opposite to each other on two sides of the tube body (31) in an axial direction (X) of the bottom bracket shell (20); alternatively, the tube wall of the tube body (31) at another side of the central axis (L) arches inward to form an inner arch portion, and the inner arch portion and the mounting recess (32) are disposed opposite to each other on the two sides of the tube body (31) in the axial direction (X) of the bottom bracket shell (20); or alternatively, the tube wall of the tube body (31) at another side of the central axis (L) arches outward to form an outer arch portion (33) and the tube wall of the tube body (31) at the another side of the central axis (L) arches inward to form an inner arch portion, and the outer arch portion (33) and the inner arch portion are disposed opposite to the mounting recess (32) on the two sides of the tube body (31) in the axial direction (X) of the bottom bracket shell (20).

2. The frame according to claim 1, wherein the tube wall of the tube body (31) at the another side of the central axis (L) arches outward to form the outer arch portion (33); the outer arch portion (33) is provided with an arc-shaped structure; and a smooth transition is provided between the outer arch portion (33) and the outer surface of the tube body (31).

3. The frame according to claim 1 or 2, wherein the tube wall of the tube body (31) at the another side of the central axis (L) arches inward to form the inner arch portion; the inner arch portion is provided with an arc-shaped structure; and a smooth transition is provided between the inner arch portion and an inner surface of the tube body (31).

4. The frame according to claim 1, wherein the tube wall of the tube body (31) at the another side of the central axis (L) arches outward to form the outer arch portion (33); and in the extension direction (Z) of the tube body (31), two ends of the outer arch portion (33) respectively extend beyond two ends of the mounting recess (32).

5. The frame according to claim 1 or 4, wherein the tube wall of the tube body (31) at the another side of the central axis (L) arches inward to form the inner arch portion; and in the extension direction (Z) of the tube body (31), two ends of the inner arch portion respectively extend beyond the two ends of the mounting recess (32).

6. The frame according to claim 1, wherein the tube wall of the tube body (31) at the another side of the central axis (L) arches outward to form the outer arch portion (33); and in a circumferential direction (M) of the tube body (31), two ends of the outer arch portion (33) respectively extend beyond two ends of the mounting recess (32).

7. The frame according to claim 1 or 6, wherein the tube wall of the tube body (31) at the another side of the central axis (L) arches inward to form the inner arch portion; and in the circumferential direction (M) of the tube body (31), two ends of the inner arch portion respectively extend beyond the two ends of the mounting recess (32).

8. The frame according to claim 1, wherein the tube wall of the tube body (31) at the another side of the central axis (L) arches outward to form the outer arch portion (33); and in the axial direction (X) of the bottom bracket shell (20), an arch height of the outer arch portion (33) relative to the tube wall of the tube body (31) is greater than a recess depth of the mounting recess (32) relative to the tube wall of the tube body (31).

9. The frame according to claim 1 or 8, wherein the tube wall of the tube body (31) at the another side of the central axis (L) arches inward to form the inner arch portion; and in the axial direction (X) of the bottom bracket shell (20), an arch height of the inner arch portion relative to the tube wall of the tube body (31) is greater than the recess depth of the mounting recess (32) relative to the tube wall of the tube body (31).

10. The frame according to claim 1, wherein the tube body (31) comprises a first tube (311) and a second tube (312) connected to each other; the first tube (311) is connected to the top tube (10) and the bottom bracket shell (20); the second tube (312) protrudes from the top tube (10) in the extension direction (Z) of the tube body (31); and the mounting recess (32) and the outer arch portion (33) are formed on the first tube (311), or the mounting recess (32) and the inner arch portion are formed on the first tube (311), or the mounting recess (32), the outer arch portion (33), and the inner arch portion are formed on the first tube (311); and
the frame further comprises a reinforcing tube (70); two ends of the reinforcing tube (70) are respectively connected to the second tube (312) and the top tube (10); and the second tube (312), the reinforcing tube (70), and the top tube (10) form a triangular support structure.

11. The frame according to claim 10, wherein an outer diameter of the first tube (311) gradually increases from one end connected to the top tube (10) to another end connected to the bottom bracket shell (20); and
the first tube (311) is provided with a middle portion in the extension direction (Z); and the mounting recess (32) is provided at the middle portion of the first tube (311) or on a side of the middle portion close to the bottom bracket shell (20).

12. The frame according to claim 1, wherein the frame further comprises a head tube (60) and a support tube (40); the head tube (60) is connected to an end of the top tube (10) away from the seat tube (30); two ends of the support tube (40) are respectively connected to the bottom bracket shell (20) and the head tube (60); and the support tube (40), the top tube (10), the bottom bracket shell (20), the seat tube (30), and the head tube (60) form a triangular support structure.

13. The frame according to claim 1, wherein the seat tube (30), the bottom bracket shell (20), and the top tube (10) are welded to each other.

14. The frame according to claim 1, wherein the seat tube (30), the bottom bracket shell (20), and the top tube (10) are integrally formed.

15. The frame according to claim 1, wherein the frame further comprises a rear fork (50); the rear fork (50) is connected to the seat tube (30) and the bottom bracket shell (20); and the rear fork (50) is configured to mount a rear wheel (300).

16. The frame according to claim 1, wherein if the tube body (31) is cut by a plane perpendicular to the extension direction (Z), a cross-sectional shape of the tube body (31) is circular.

17. The frame according to claim 1, wherein if the tube body (31) is cut by a plane perpendicular to the extension direction (Z), a cross-sectional shape of the tube body (31) is elliptical.

18. A bicycle, comprising the frame according to any one of claims 1 to 17.
